# FASCICULE DE BREVET EUROPEEN

(11) **EP 0 544 136 B1**
(45) Date de publication et mention de la délivrance du brevet: **14.05.1997**
(21) Numéro de dépôt: 92119037.7
(22) Date de dépôt: 06.11.1992
(51) Int. Cl.: G06K 7/08

(54) **Structure d'antenne adaptée pour la communication avec une étiquette électronique implantée dans un pneumatique**
Antenne, geeignet zur Kommunikation mit einem elektronischen, in einem Reifen eingebauten Etikett
Antenna structure adapted for communication with an electronic tag implanted in a tire

(30) Priorité: 14.11.1991 FR 9114264
(43) Date de publication de la demande: 02.06.1993
(73) Titulaire: COMPAGNIE GENERALE DES ETABLISSEMENTS MICHELIN - MICHELIN & CIE, 63040 Clermont-Ferrand Cédex (FR)
(72) Inventeur: Myatt, David, F-63119 Chateaugay (FR)
(74) Mandataire: Bauvir, Jacques

(56) Documents cités:
- EP-A- 0 043 591
- EP-A- 0 257 688
- WO-A-86/02186
- US-A- 1 796 295
- US-A- 3 160 865
- US-A- 3 460 119

## Description

La présente invention concerne l'identification des pneumatiques comportant une étiquette électronique noyée dans leur épaisseur. Plus particulièrement, elle concerne la structure des antennes adaptée pour cette communication.

On cherche depuis très longtemps à incorporer au pneumatique des transpondeurs permettant l'identification par des signaux électromagnétiques, notamment afin de pouvoir gérer les flux pendant la fabrication des pneumatiques. L'un des problèmes contre lequel on bute pour incorporer des transpondeurs dans le pneumatique est que l'orientation du transpondeur par rapport à la station d'interrogation, et plus particulièrement par rapport à l'antenne servant à l'interrogation, n'est en général pas connue. Or, à moins que l'orientation de l'antenne corresponde à l'orientation de l'antenne du transpondeur, la distance de lecture ou d'écriture peut être très sévèrement réduite. Si les deux antennes sont perpendiculaires l'une par rapport à l'autre, alors la communication est même impossible.

Les solutions disponibles dans l'état de la technique pour remédier à ce problème sont essentiellement de trois types différents. Tout d'abord, on a proposé de parcourir le pneumatique contenant le transpondeur avec l'antenne d'inspection afin d'essayer toutes les possibilités de position et d'orientation relatives entre l'antenne d'inspection et l'antenne du transpondeur incorporé dans le pneumatique jusqu'à ce qu'un signal soit détecté. A titre d'exemple le brevet US 3 160 865 propose un appareil de communication dont l'antenne est rotative.

On peut aussi imaginer de repérer visuellement, à la surface du pneumatique, la position et l'orientation du transpondeur qu'il contient. Cela introduit une contrainte supplémentaire lors de la fabrication du pneumatique, et cette contrainte est en général inacceptable.

Enfin, on peut imaginer de régler ce problème en multipliant les antennes d'interrogation de façon à les disposer selon toutes les orientations possibles pour que au moins l'une d'elles soit capable d'entrer en communication avec l'antenne du transpondeur. Cette solution non seulement multiplie le prix de revient de l'appareil d'interrogation, mais encore entraîne des difficultés techniques spécifiques qui seront expliquées ci-dessous.

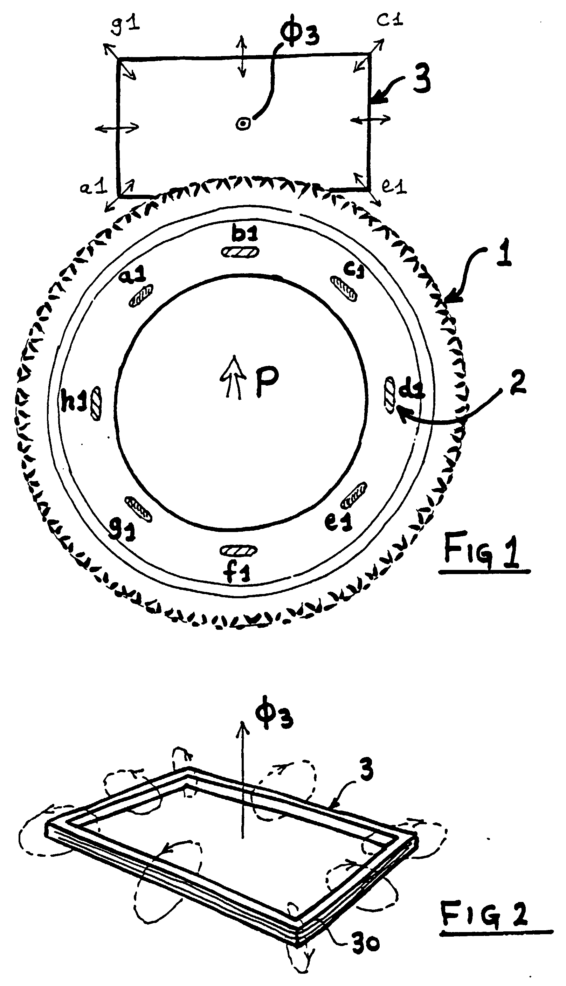

Aux figures 1 et 2, on a illustré le problème que pose la communication avec un transpondeur incorporé dans un pneumatique. On aperçoit un pneumatique 1 qui comporte un transpondeur avec son antenne 2, implanté dans le flanc ou dans le bourrelet de celui-ci. En général, le transpondeur est implanté dans la partie haute du bourrelet, plus précisément dans le bourrage tringle. Le pneumatique 1 tel qu'il apparaît à la figure 1 est posé à plat sur un tapis de convoyage et chemine dans la direction P vers une antenne de communication 3. L'antenne 3 est mise à plat sous le tapis ou sur celui-ci. Fondamentalement, l'antenne 3 forme un plan parallèle au pneumatique. Cette antenne est constituée par une pluralité de spires 30 bobinées sur un cadre réalisé en matériau amagnétique, chaque spire 30 embrassant le rectangle qui apparaît à la figure 1. Si on alimente un tel bobinage en courant, il va apparaître un flux magnétique φ3 dont l'orientation est perpendiculaire au plan de la figure, et dont le sens dépend du sens du courant. On définit l'axe magnétique d'un tel bobinage comme étant l'orientation du flux résultant (Sud - Nord) que développerait un tel bobinage si on l'alimentait par un courant continu.

Le transpondeur avec son antenne 2 est implanté dans le pneumatique à un endroit que l'on ignore. Toutes les positions possibles sont symbolisées à la figure 1 par les positions a1, b1, c1, ..., h1. Le transpondeur comporte une antenne 2 de communication réalisée en bobinant un grand nombre de spires sur une petite ferrite cylindrique allongée, et qui est visualisée schématiquement sur les dessins. L'axe magnétique (selon la définition conventionnelle donnée ci-dessus) d'une telle antenne se développe dans le plan de la figure, selon le grand axe de l'ovale schématisant la position du transpondeur sur la figure 1. Si, dans le pneumatique, la position en azimuth du transpondeur (donc de son antenne 2) est inconnue, on sait par contre qu'il se situe au niveau du bourrage tringle, avec son antenne 2 orientée comme indiquée ci-dessus. Autrement dit, seulement un seul degré de liberté pour caractériser l'implantation de l'antenne 2 du transpondeur reste inconnu.

Si le transpondeur occupe la position b1 ou f1, alors le couplage entre les antennes est toujours impossible quel que soit l'avancement du pneumatique vers l'antenne 3. Les doubles flèches que l'on voit sur l'antenne 3 à la figure 1 représentent le flux qui entoure les spires de la bobine au voisinage immédiat de ces spires 30. C'est l'orientation que prendrait l'aiguille d'une boussole placée à quelques centimètres au dessus de l'antenne 3, c'est-à-dire sensiblement au niveau de passage du flanc du pneumatique. On comprend que, dans cette réalisation de l'art antérieur, les lignes de flux seront toujours perpendiculaires à l'axe magnétique de l'antenne du transpondeur, si celui-ci occupe la position b1 ou f1.

Si par contre, le transpondeur occupe la position a1, alors lorsque le pneumatique est au droit de l'antenne 3 le couplage est possible avec la position a1 indiquée sur l'antenne 3. Le même raisonnement conduit à observer que le couplage sera possible si le transpondeur occupe la position c1, e1 ou g1.

Si le transpondeur occupe la position h1 ou d1, alors, avec une antenne 3 telle qu'elle apparaît à la figure 1, le couplage est aléatoire ou plus difficile parce que jamais le flux émanant de l'antenne du transpondeur n'est aligné avec la direction du maximum de sensibilité de l'antenne 3, telle qu'elle est visualisée par les doubles flèches sur l'antenne 3 de la figure 1. Par contre, si la même antenne occupait toute la largeur du tapis, plus précisément si sa largeur était au moins égale au diamètre d'implantation du transpondeur dans le pneumatique, alors la communication serait possible puisque le flux entourant les spires 30 transversales de l'antenne 3 serait aligné avec l'axe magnétique de l'antenne du transpondeur.

La figure 2 est une représentation en perspective de la même antenne 3, sur laquelle on a représenté l'axe magnétique φ3 sous forme d'une flèche en trait continu, et les lignes de flux entourant les spires sous forme de ligne discontinue. On voit également la disposition de chaque spire 30 par rapport au cadre rectangulaire qui les supporte.

En résumé, on voit que la lecture du transpondeur sera toujours possible si celui-ci occupe des positions proches des positions a1, c1, g1, ou e1 (probabilité de 50 %), qu'elle sera toujours impossible si le transpondeur occupe des positions telles que b1 et f1 (probabilité de 25 %) et que la lecture peut être aléatoire pour les positions h1 et d1, en fonction de la position exacte du pneumatique sur le tapis de convoyage et de la position et de la taille de l'antenne par rapport à ce tapis de convoyage.

Au lieu de multiplier les antennes d'interrogation pour créer des champs magnétiques avec des orientations multiples, la présente invention propose une nouvelle forme d'antenne bobinée qui puisse développer un champ magnétique dont l'orientation correspondra toujours avec l'une des orientations requises pour pouvoir lire le transpondeur noyé dans le pneumatique.

L'antenne pour transmettre un signal entre une étiquette électronique implantée dans un flanc ou un bourrelet d'un pneumatique et un dispositif de traitement dudit signal, le pneumatique étant disposé à plat sur un tapis de convoyage, ladite étiquette étant pourvue d'un bobinage pour la transmission dudit signal par couplage électromagnétique, ledit tapis de convoyage permettant de déplacer linéairement devant ladite antenne ledit pneumatique, ladite antenne comportant un seul bobinage constitué d'une seule pluralité de spires bobinées sur un support, ladite antenne ayant une partie centrale à disposer sensiblement au milieu du tapis de convoyage, et deux bords latéraux à disposer sensiblement de chaque côté du tapis de convoyage, celui-ci étant considéré transversalement par rapport à son sens de déplacement, est caractérisée en ce qu'elle comporte des brins de spire disposés de telle sorte que le flux engendré autour desdits brins trace une boucle dont le plan est perpendiculaire au sens de marche dans sa partie centrale, puis change progressivement d'orientation pour devenir parallèle au sens de marche, en restant toujours perpendiculaire au tapis de convoyage, lorsque l'on se déplace depuis la partie centrale vers chacun des bords latéraux de l'antenne.

Un autre problème difficile à résoudre est de rendre ces antennes très sensibles au flux émanant des transpondeurs enfouis dans les pneumatiques, tout en les rendant insensibles au flux ambiant, résultant de l'environnement de l'atelier. Ce problème est résolu de la façon suivante : en considérant le plan médian de l'antenne orienté parallèlement au sens de déplacement du tapis, et perpendiculairement au tapis, ledit support se développe de chaque côté dudit plan médian de telle sorte que les spires bobinées sur un côté du support aient un axe magnétique résultant orienté en direction opposée de l'axe magnétique des spires bobinées sur l'autre côté du support.

Deux variantes de réalisation de l'invention sont décrites ci-après et illustrées au moyen des figures suivantes :

La figure 3 illustre un pneumatique cheminant sur un tapis de convoyage et approchant une antenne de communication.

La figure 4 est une perspective de cette antenne de communication.

La figure 5 montre un pneumatique cheminant vers une antenne réalisée selon la seconde variante de l'invention.

La figure 6 est une perspective de cette antenne de communication.

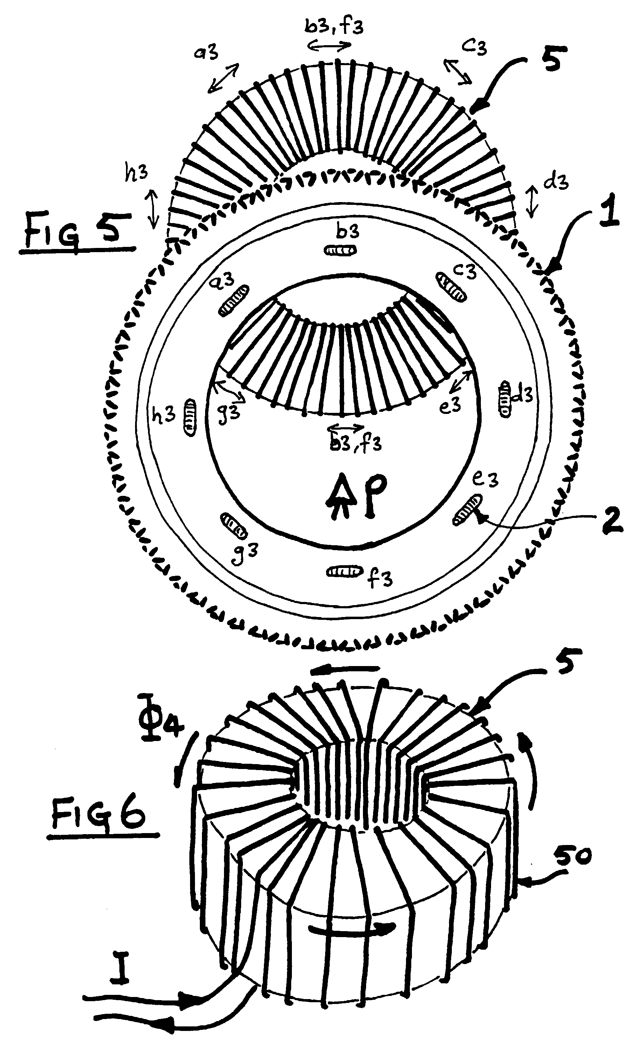

On voit que l'antenne de la figure 4 est réalisée à partir d'une boucle fermée, tout comme celle de la figure 2, mais que cette boucle est repliée sur elle-même de façon à prendre l'allure d'un huit ou d'ailes de papillon. Le support est réalisé en matériau amagnétique de façon à ne pas canaliser les lignes de flux. Chaque spire 40 se développe tout le long de ladite boucle en huit. Le champ magnétique produit par une antenne ayant cette forme en huit est montré par les flèches réalisées en traits discontinus sur la figure 4. On voit qu'il existe toujours un ou plusieurs brins de spires orientés de telle façon qu'il y ait un couplage maximum entre le brin considéré et l'antenne du transpondeur pour toute position de celle-ci : il faut qu'il y ait pour toute position du transpondeur, des brins de spires orientés perpendiculairement à l'axe de la ferrite (axe magnétique) de l'antenne du transpondeur, c'est-à-dire perpendiculairement au grand axe de l'ovale figurant l'implantation du transpondeur.

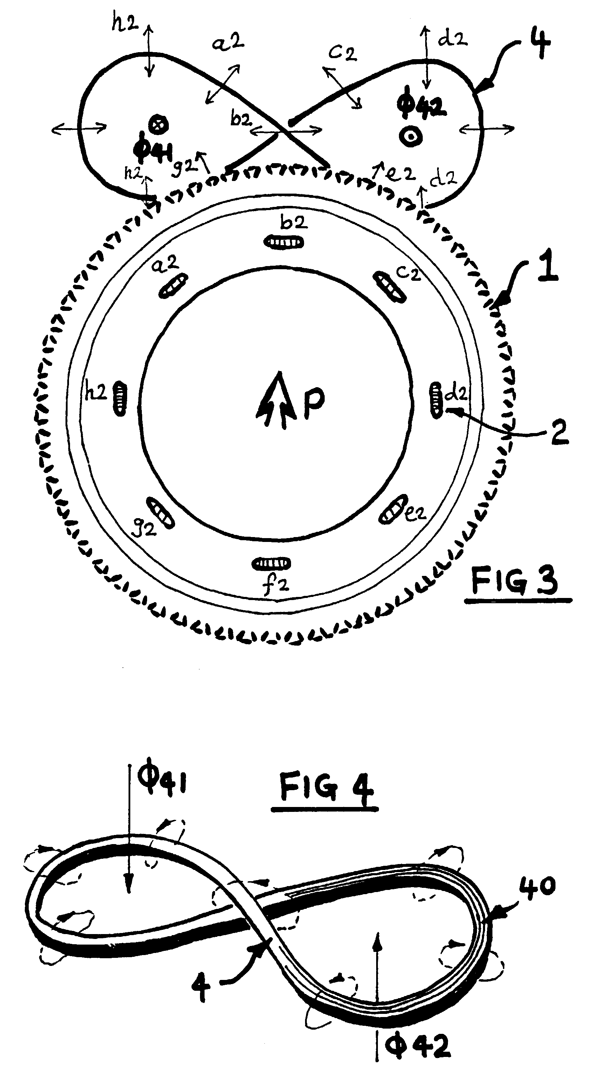

On voit que cette antenne 4 comporte un plan de symétrie, et que le flux résultant produit par chacune des deux parties est orienté en sens inverse. Autrement dit, l'axe magnétique φ₄₁ de la partie gauche pointe vers le bas, alors que l'axe magnétique φ₄₂ de la partie droite pointe vers le haut. Les effets combinés de chacune des deux parties font que au centre de cette antenne 4, la direction privilégiée de couplage est transversale, comme cela apparaît par la double flèche apparaissant au centre de l'antenne 4 à la figure 3. Si l'on examine à nouveau toutes les possibilités de position du transpondeur implanté dans le pneumatique 1, on voit que le couplage entre l'antenne 2 du transpondeur et l'antenne 4 est toujours possible. Si la position du transpondeur est b2, ou f2 alors le couplage se fera au centre de l'antenne en b2. Si la position du transpondeur est h2, alors il y a deux positions h2 de couplage possible sur l'antenne 4. Et ainsi de suite, on voit que toutes les positions possibles du transpondeur ont une localisation de couplage sur l'antenne 4. De par les orientations respectives des axes magnétiques φ₄₁ et φ₄₂, l'antenne 4 n'est pas sensible au flux venant d'une source éloignée, qui embrasse la totalité de l'antenne de façon homogène.

Les conditions à respecter pour utiliser une telle antenne sont que la dimension transversale de cette antenne doit être suffisante pour englober toutes les positions possibles pour le transpondeur. De préférence, le support doit être conformé comme il apparaît à la figure 3 afin que les directions préférentielles de couplage en cheminant le long des spires soient parallèles à l'endroit correspondant aux orientations possibles du transpondeur implanté dans le pneumatique, l'axe magnétique de celui-ci étant toujours situé sur une circonférence du pneumatique. De préférence, l'orientation des brins de spire change progressivement et régulièrement pour passer de la partie centrale à chacun des bords latéraux. L'antenne doit être implantée de telle sorte que son plan médian inclut la direction de déplacement du pneumatique par rapport à l'antenne, et le plan médian correspond sensiblement au milieu du pneumatique.

Si cette antenne est placée sous un convoyeur transportant dans la direction P un pneumatique équipé d'un transpondeur enfoui dans une quelconque des positions représentées à la figure 3, on voit que lorsque le pneumatique chemine par dessus l'antenne, il y aura toujours un instant pendant lequel le champ magnétique de l'antenne 4 et de l'antenne du transpondeur sont alignés, de sorte que la communication entre les antennes peut être établie. La présente invention impose bien entendu que l'antenne du transpondeur implanté dans le flanc du pneumatique ait un axe magnétique tangent à une circonférence du pneumatique. Cette condition est très simple à réaliser. Cette antenne 4 en papillon règle tous les problèmes d'orientation respective de l'antenne par rapport au pneumatique et donc l'exploitation de l'identification par étiquette électronique est grandement facilitée.

L'antenne apparaissant à la figure 6 est réalisée sur un support torique fermé réalisé en matériau amagnétique sur lequel une pluralité de spires 50 sont bobinées de façon à réaliser un bobinage torique. Il est important que le support soit réalisé en matériau amagnétique de façon à ne pas concentrer le flux magnétique à l'intérieur des spires. Pour qu'une telle antenne torique puisse communiquer avec un pneumatique que l'on va faire cheminer par dessus elle, il est nécessaire qu'il y ait un flux de fuite très important. C'est le flux de fuite que l'on va exploiter pour coupler l'antenne 5 avec l'antenne d'un transpondeur enfoui dans un pneumatique. La figure 5 montre l'utilisation d'une telle antenne 5 que l'on a implantée par exemple sous un tapis de convoyage sur lequel chemine un pneumatique 1, dans la direction représentée par la flèche P. Les différentes localisations possibles du transpondeur sont indiquées par les positions a3 à h3 sur le pneumatique 1 de la figure 5. Les positions de couplage correspondantes sur l'antenne 5 sont désignées par les repères a3 à h3. Là encore, on voit que si le pneumatique 1 chemine par dessus l'antenne torique ainsi constituée, il y aura toujours un instant pendant lequel le couplage entre le transpondeur et l'antenne sera possible. En outre si une antenne 5 de ce type est présentée au pneumatique de sorte que les axes du tore et du pneumatique soient confondus, alors la rotation relative de l'antenne et du pneumatique sur un tour permet aussi toujours une communication par lecture et/ou écriture du transpondeur.

Non seulement les antennes 4 et 5 qui viennent d'être décrites règlent le problème de l'orientation relative du pneumatique 1 par rapport à l'antenne, mais en plus, elles jouissent toutes les deux d'un avantage supplémentaire par rapport à d'autres solutions de l'état de la technique. En effet, la forme de ces antennes leur permet de rejeter, pour les raisons expliquées ci-dessus, de façon inhérente les perturbations électromagnétiques d'origines extérieures au transpondeur du pneumatique. En effet, les parasites électromagnétiques qui viennent d'ailleurs développeront un champ sensiblement homogène embrassant la totalité de l'antenne. Or, un champ homogène est incapable d'induire un voltage dans une antenne telle que les antennes 4 et 5 parce que celle-ci se comporte comme deux antennes bobinées en opposition. Ce type d'antenne est donc très insensible aux parasites électromagnétiques contrairement à toutes les antennes connues dans l'état de la technique qui toutes imposent de pouvoir discriminer entre le signal utile et le bruit de fond. Ce problème est tout particulièrement ardu lorsque l'on utilise plusieurs antennes en parallèle, avec des orientations différentes, car toutes ces antennes captent le bruit de fond, alors qu'une seule d'entre elles capte le signal utile.

## Revendications

1. Système de transmission d'un signal entre une antenne reliée à un dispositif de traitement dudit signal et une étiquette électronique (2) implantée dans un flanc ou un bourrelet d'un pneumatique (1), le pneumatique (1) étant disposé à plat sur un tapis de convoyage, ladite étiquette (2) étant pourvue d'un bobinage pour la transmission dudit signal par couplage électromagnétique, ledit tapis de convoyage permettant de déplacer ledit pneumatique (1) linéairement devant ladite antenne, ladite antenne comportant un seul bobinage constitué d'une pluralité de spires bobinées sur un support, ladite antenne ayant une partie centrale à disposer sensiblement au milieu du tapis de convoyage, et deux bords latéraux à disposer sensiblement de chaque côté du tapis de convoyage, celui-ci étant considéré transversalement par rapport à son sens de déplacement, caractérisée en ce que l'antenne comporte des brins de spire (40 ou 50) disposés de telle sorte que le flux engendré autour desdits brins trace une boucle dont le plan est perpendiculaire au sens de marche dans sa partie centrale, puis change progressivement d'orientation pour devenir parallèle au sens de marche, en restant toujours perpendiculaire au tapis de convoyage, lorsque l'on se déplace depuis ladite partie centrale vers chacun des bords latéraux de l'antenne.

2. Système selon la revendication 1 caractérisée en ce que l'orientation des brins de spire (40 ou 50) de l'antenne change progressivement et régulièrement pour passer de la partie centrale à chacun des bords latéraux.

3. Système selon la revendication 1 ou 2, caractérisée en ce que, en considérant le plan médian de l'antenne orienté parallèlement au sens du déplacement du tapis, et perpendiculairement au tapis, le support se développe de chaque côté dudit plan médian de telle sorte que les spires (40 ou 50) bobinées sur un côté du support aient un axe magnétique résultant orienté en direction opposée de l'axe magnétique des spires bobinées sur l'autre côté du support.

4. Système selon la revendication 3, caractérisée en ce que le support des spires est réalisé en matériau amagnétique, à partir d'une boucle fermée, repliée pour prendre l'allure d'un huit, chaque spire (40) se développant le long de ladite boucle et prenant également l'allure d'un huit.

5. Système selon la revendication 3, caractérisée en ce que le support des spires est un tore fermé, réalisé en matériau amagnétique, sur lequel les spires (50) sont bobinées de façon à réaliser un bobinage torique.

## Patentansprüche

1. System zur Übertragung eines Signals zwischen einer Antenne, die mit einer Vorrichtung zur Verarbeitung des genannten Signals verbunden ist, und einem elektronischen Etikett (2), das in eine Flanke oder einen Wulst eines Reifens (1) eingelassen ist, wobei der Reifen (1) flach auf einem Förderband angeordnet ist, das genannte Etikett (2) mit einer Spule für die Übertragung des genannten Signals durch elektromagnetische Koppelung versehen ist, das genannte Förderband die lineare Bewegung des genannten Reifens (1) vor der genannten Antenne gestattet, die genannte Antenne eine einzige Spule aufweist, die von einer Vielzahl von Windungen gebildet ist, die auf einen Träger gewickelt sind, und die genannte Antenne einen mittleren Abschnitt aufweist, der im wesentlichen in der Mitte des Förderbandes anzuordnen ist, sowie zwei seitliche Ränder, die im wesentlichen auf jeder Seite des Förderbands anzuordnen sind, quer zu seiner Bewegungsrichtung gesehen, dadurch **gekennzeichnet,** daß die Antenne Windungselemente (40 oder 50) aufweist, die derartig angeordnet sind, daß der Fluß, der rund um die genannten Windungen herbeigeführt wird, eine Schleife durchläuft, deren Ebene in ihrem mittleren Abschnitt senkrecht ist zur Laufrichtung, dann fortlaufend die Richtung ändert, um parallel zur Laufrichtung zu werden, wobei er stets senkrecht zum Förderband verbleibt, wenn er sich aus dem genannten mittleren Abschnitt zu jedem der seitlichen Ränder der Antenne bewegt.

2. System nach Anspruch 1, dadurch **gekennzeichnet,** daß die Ausrichtung der Windungselemente (40 oder 50) der Antenne sich fortlaufend und regelmäßig ändert, um vom mittleren Abschnitt zu jedem der seitlichen Bänder zu verlaufen.

3. System nach Anspruch 1 oder 2, dadurch **gekennzeichnet,** daß, wenn man die Mittelebene der Antenne betrachtet, die parallel zur Bewegungsrichtung des Bandes angeordnet ist, und senkrecht zum Band, der Träger sich von jeder Seite der genannten Mittelebene derart erstreckt, daß die Windungen (40 oder 50), die auf einer Seite des Trägers aufgewickelt sind, eine resultierende magnetische Achse aufweisen, die in Gegenrichtung zur magnetischen Achse der Windungen gerichtet ist, die auf der anderen Seite des Trägers aufgewickelt sind.

4. System nach Anspruch 3, dadurch **gekennzeichnet,** daß der Träger der Windungen aus nichtmagnetischem Material hergestellt ist, von einer geschlossenen Schleife ausgehend, die derartig geschlungen ist, daß sie das Aussehen einer Acht einnimmt, wobei sich jede Windung (40) längs der genannten Schleife erstreckt und ebenfalls das Aussehen einer Acht einnimmt.

5. System nach Anspruch 3, dadurch **gekennzeichnet,** daß der Träger der Windungen ein geschlossener Kreisring ist, der aus nichtmagnetischem Material gebildet ist und auf dem die Windungen (50) derart aufgewickelt sind, daß sie eine kreisringförmige Spule bilden.

## Claims

1. A system for transmitting a signal between an antenna connected to a processing device for said signal and an electronic tag (2) implanted in a sidewall or a bead of a pneumatic tyre (1), the pneumatic tyre (1) being placed flat on a conveyor belt, said tag (2) being provided with a winding for the transmission of said signal by electromagnetic coupling, said conveyor belt making it possible to move said pneumatic tyre (1) in a linear direction in front of said antenna, said antenna comprising a single winding consisting of a plurality of turns wound on a support, said antenna having a central part to be located substantially in the centre of the conveyor belt, and two lateral edges to be placed substantially on each side of the conveyor belt, the latter being viewed transversely with respect to its direction of movement, characterised in that the antenna comprises turn strands (40 or 50) placed so that the flux generated around said strands describes a loop the plane of which is perpendicular to the direction of movement in its central part, then changes gradually in orientation to become parallel to the direction of movement, while always remaining perpendicular to the conveyor belt, when moving from said central part towards each of the lateral edges of the antenna.

2. A system according to claim 1, characterised in that the orientation of the turn strands (40 or 50) of the antenna changes gradually and evenly to go from the central part to each of the lateral edges.

3. A system according to claim 1 or 2, characterised in that viewing the median plane of the antenna oriented parallel to the direction of movement of the belt, and perpendicular to the belt, the support is developed on each side of said median plane so that the turns (40 or 50) wound on one side of the support have a resulting magnetic axis oriented in the opposite direction from the magnetic axis of the turns wound on the other side of the support.

4. A system according to claim 3, characterised in that the support for the turns is made of nonmagnetic material, from a closed loop, folded to take the shape of a figure eight, each turn (40) being developed along said loop and also taking the shape of a figure eight.

5. A system according to claim 3, characterised in that the support for the turns is a closed torus, made of nonmagnetic material, on which the turns (50) are wound so as to make a toric winding.
